# EUROPEAN PATENT SPECIFICATION

(11) **EP 2 681 500 B1**
(45) Date of publication and mention of the grant of the patent: **27.09.2017**
(21) Application number: 12752540.0
(22) Date of filing: 20.01.2012
(51) Int. Cl.: F22B 37/24, G21C 19/02, G21C 19/20

(54) **NUCLEAR STEAM GENERATOR SUPPORT AND ALIGNMENT STRUCTURE**
STRUKTUR ZUM TRAGEN UND AUSRICHTEN EINES NUKLEAREN DAMPFERZEUGERS
STRUCTURE DE SUPPORT ET D'ALIGNEMENT DE GÉNÉRATEUR DE VAPEUR NUCLÉAIRE

(30) Priority: 01.03.2011 US 201161447892 P; 05.08.2011 US 201113204091
(43) Date of publication of application: 08.01.2014
(73) Proprietor: Westinghouse Electric Company LLC, Cranberry Township, PA 16066 (US)
(72) Inventor: PATEL, Raman, G., Pittsburgh, PA 15239 (US); WALTERS, Daniel, L., Monroeville, PA 15146 (US); FRANCIS, Arthur, W., Cranberry, PA 16066 (US); HERLEMAN, Christopher, F., Coraopolis, PA 15108 (US); EKEROTH, Douglas, E., Delmont, PA 15626 (US); ROHR, Matthew, M., Belle Vernon, PA 15012 (US); STEMLER, Abby, L., Pittsburgh, PA 15218 (US); OTT, Howard, L., Apollo, PA 15613 (US)
(74) Representative: Round, Edward Mark
(86) International application number: PCT/US2012/022007
(87) International publication number: WO 2012/118570

(56) References cited:
- US-A- 3 027 159
- US-A- 3 901 196
- US-A- 4 064 005
- US-A- 4 236 970
- US-A- 4 644 908
- US-A- 4 984 627
- US-A- 5 257 890
- CERJAK ET AL.: 'Steam Generator Replacement Project in 2000' INTERNATIONAL CONFERENCE NUCLEAR ENERGY IN CENTRAL EUROPE 99', [Online] 06 September 1999 - 09 September 1999, pages 407 - 413, XP055129059 Retrieved from the Internet: <URL:http:l/www.djs.siJprodport1999/224.pdf > [retrieved on 2012-05-22]

## Description

### BACKGROUND

### 1. Field

The embodiments described herein pertain generally to nuclear steam generator supports and more particularly to a nuclear containment support that can raise, lower, tilt and rotate a steam generator to align the steam generator with the reactor coolant piping that is to be welded to during nuclear plant construction.

### 2. Description of Related Art

The primary side of nuclear reactor power generating systems which are cooled with water under pressure comprise a closed circuit which is isolated and in heat exchange relationship with a secondary circuit for the production of useful energy. The primary side comprises the reactor vessel enclosing a core internal structure that supports a plurality of fuel assemblies containing fissile material, the primary circuit within heat exchange steam generators, the inner volume of the pressurizer, pumps and pipes for circulating pressurized water; the pipes connecting each of the steam generators and pumps to the reactor vessel independently. Each of the parts of the primary side comprising a steam generator, a pump and a system of pipes which are connected to the vessel form a loop of the primary side of the nuclear power generating system.

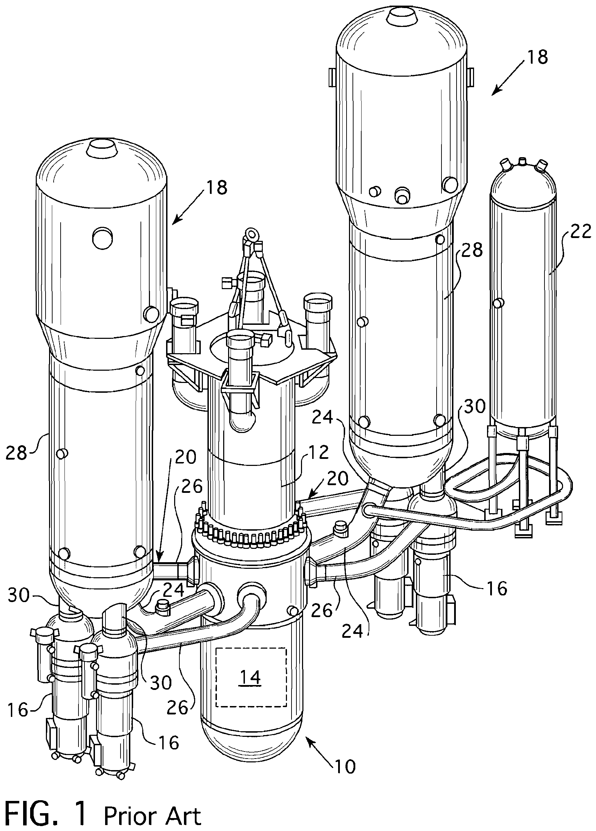

For the purpose of illustration, Figure 1 shows a simplified nuclear reactor primary system, including a generally cylindrical reactor pressure vessel 10 having a closure head 12 enclosing a nuclear core 14. A liquid reactor coolant, such as water or borated water, is pumped into the vessel 10 by pump 16 through the core 14 where heat energy is absorbed and is discharged to a heat exchanger 18, typically referred to a steam generator, in which heat is transferred to a utilization circuit (not shown), such as a steam driven turbine generator. The reactor coolant is then returned to the pump 16, completing the primary loop. Typically, a plurality of the above described loops are connected to a single reactor vessel 10 by the reactor coolant piping 20 with one of the primary coolant loops including a pressurizer 22 for regulating the pressure of the primary system.

Each steam generator 18 is a vertical-shell U-tube evaporator with integral moisture separating equipment. The reactor coolant flow enters the steam generator 18 through a single hot leg nozzle 24 before passing into the inverted U-tubes which occupy a substantial portion of the reduced diameter generally cylindrical shell 28, where it transfers heat to the secondary side as it passes through the U-tubes and returns to the cold leg side 26 of the primary coolant piping 20. The flow leaves the steam generator through two cold leg nozzles 30, to each of which a reactor coolant pump 16 is directly attached. The discharge nozzles of the coolant pumps 16 are each connected to a cold leg 26 of the main coolant piping to convey the relatively cool reactor coolant back to the reactor vessel 10 for recirculation through the core 14, where the cycle is repeated. The primary reactor power generating system thus described is an advanced passive nuclear power generating facility known as the AP1000 plant, designed and sold by the Westinghouse Electric Company LLC, headquartered in Cranberry Township, Pennsylvania. During the development of AP1000 installation procedure, it was recognized that the AP1000 nuclear plant steam generator has unique features. Previous methods used in erecting legacy steam generators and nuclear plant configurations used spool pieces to join the primary coolant piping to the steam generators and the main coolant pumps were connected to a span of the cold leg of the reactor coolant piping spaced from the steam generators. The prior art steam generators typically had four legged stable supports that supported them from below. The unique features of the AP1000 nuclear plant design in, for example, having the main coolant pumps directly connected to the bottom of the steam generators required that a different support approach be taken. A single "pogo stick type" pedestal support was designed for this purpose. In addition, the AP1000 steam generator is designed to be welded to the main coolant piping using no spool pieces, which requires exacting alignment of the main coolant piping with the corresponding nozzles on the steam generators and coolant pumps. Considering that an AP1000 nuclear plant steam generator weighs approximately 1,463,000 pounds (664 metric tons), a precision alignment device is required during nuclear plant construction to assemble the steam generator in the nuclear plant primary system. Preferably, such an alignment device can support the entire weight of the steam generator assembly to free to the overhead crane typically employed for coarsely positioning the steam generator, for other construction projects.

Thus, it is an object of this invention to provide a steam generator alignment fixture that can precisely position and align the steam generator inlet nozzles and pump outlet nozzles with the corresponding primary loop piping.

It is a further object of this invention to provide such a fixture that can support the entire weight of the steam generator without the assistance of an overhead crane.

It is an additional object of this invention to provide such a fixture that has the ability to raise, lower, rotate and laterally move the steam generator into appropriate alignment.

It is an additional object to provide such a fixture that will facilitate the erection of a permanent support for the steam generator.

Further, it is an object of this invention to provide such a fixture that can be readily dismantled and reused once a permanent support for the steam generator has been erected.

We acknowledge the disclosure in US 3027159 of roller apparatus for supporting boilers and pipes. The workpiece rotator comprising a base, at least one pair of carriages relatively movable on said base, a plurality of parallel axes rollers journalled on said carriages to rotatably support a cylindrical workpiece axially parallel to said rollers between said carriages, a track member on said base and extending transversely to the axis of said rollers, and means for effecting engagement and disengagement between said track member and at least one of said rollers which, when in engagement with said track member, serves as a wheel to move at least one of said carriages.

US527890 discloses a support and alignment structure that is arranged for supporting, lifting, and rotating heavy cylindrical loads in a vertical orientation.

US3675915 discloses a support and alignment structure for a heavy pressure vessel of a nuclear power plant.

### SUMMARY

These and other objects are achieved by the nuclear steam generator support and alignment structure as defined in Claim 1 that supports the steam generator from a floor or an internal wall within a nuclear containment. The support and alignment structure described herein comprises a substantially rigid support fixture that extends from the floor or internal wall of a nuclear containment and is attached to at least two sides of the steam generator. The substantially rigid support fixture includes a base, a support section and means for aligning the generator. The base rests on the floor or internal wall of the containment. The support section is coupled to at least a portion of the circumference of a side of the steam generator. The means for aligning the generator is operable to raise, lower or rotate the support section relative to the base with the generator secured within the support section, to align the generator. Preferably, the means for raising, lowering or rotating the support section includes a plurality of hydraulic jacks between the base and the support section, and desirably, the means for so orienting the support section can tilt and laterally move the support section relative to the base while supporting the entire weight of the steam generator assembly while it is being aligned.

In one embodiment, the means for raising and lowering the support section relative to the base with the steam generator secured within the support section provides for fine movement of the steam generator sufficient to align the steam generator inlet nozzle and one or more steam generator outlet nozzles respectively with the primary coolant piping of a reactor system. Such fine movement of the steam generator is in as little as 0.03125 inch (0.07938 centimeter) increments.

In a preferred embodiment, the support section comprises an upper support section, connected to an upper cylindrical section of the steam generator, and a lower support section, connected to a lower cylindrical reduced diameter cylindrical section of the steam generator and the means for raising, lowering or rotating the support section relative to the base is connected between the upper support section and the base. Preferably, the lower support section is located below the base and the steam generator dead weight, *i.e.,* weight without water, is substantially supported by the upper support section from at least two substantially diametrically opposed lift links which engage trunnions on the side of the steam generator. Desirably, where the steam generator is at least partially surrounded by an internal containment wall, the upper support section is supported upon at least four points on the wall and preferably a support at each of the at least four points on the wall has at least one lateral hydraulic member for laterally moving the steam generator. Desirably, the at least one lateral hydraulic member comprises two lateral hydraulic members respectively moveable in an X and Y direction. In one preferred embodiment, the upper support section includes a support ring that substantially surrounds a circumference of the upper cylindrical section of the steam generator and each of the lateral hydraulic members respectively engages the support ring to laterally move the support ring and thus the generator when the lateral hydraulic members are activated. Preferably, the support ring supports and engages a plurality of vertical hydraulic members, wherein each of the vertical hydraulic members is positioned adjacent a corresponding lateral hydraulic member. Desirably, each of the vertical hydraulic members engage and support a support frame which is engaged with each steam generator lift link.

In still another preferred embodiment, the lower support section is braced against at least two diametrically opposed points on an inside of the internal containment wall in a manner that will permit the steam generator to rotate and move up, down and laterally a given distance, but limit the side-to-side movement of the steam generator. Preferably, the lower support section includes lateral hydraulic extension arms that brace against the inside of the internal containment wall. Desirably, the lateral hydraulic extension arms retract towards the steam generator so that the steam generator can be initially positioned within the internal wall.

In a further preferred embodiment, the means for raising, lowering, laterally moving and rotating the support section relative to the base comprises a plurality of hydraulic members and preferably some of the hydraulic members act in combination with a bearing plate or roller support to effect movement of the steam generator.

### BRIEF DESCRIPTION OF THE DRAWINGS

A further understanding of the invention can be gained from the following description of the preferred embodiments when read in conjunction with the accompanying drawings in which:
Figure 1 is a simplified perspective view of nuclear reactor primary system to which this embodiment can be applied;
Figure 2A is a perspective view of the upper support section of one embodiment described herein with a steam generator shown in phantom supported within a containment cubicle;
Figure 2B is another perspective view of the upper support section shown in Figure 2A;
Figure 3 is an enlarged view of the upper support section shown in Figure 2;
Figure 4 is an enlarged perspective view of a wall support saddle and associated hydraulic mechanisms of the upper support section shown in Figures 2 and 3;
Figure 5 is another perspective view of the wall support saddle shown in Figure 4;
Figure 6 is a plan view of the upper support section shown in Figures 2 through 5;
Figure 7A is a schematic view of the lower support of the embodiment described herein circumscribing a lower portion of the shell of a steam generator, shown in phantom, with the lower support in a retracted position;
Figure 7B is a schematic view of the support shown in Figure 7A with the laterally extending arms deployed;
Figure 7C is a perspective view of Figure 7B with the steam generator slightly rotated to better show the extending member deployed;
Figure 8 is an isometric view of the lower support shown in Figure 7;
Figure 9 is a plan view of another embodiment of the upper support employing Hillman rollers to effect rotation of the steam generator;
Figure 10 is a schematic side view of the embodiment illustrated in Figure 9;
Figure 11 is a side view partially in section of another embodiment of the lower support described herein; and

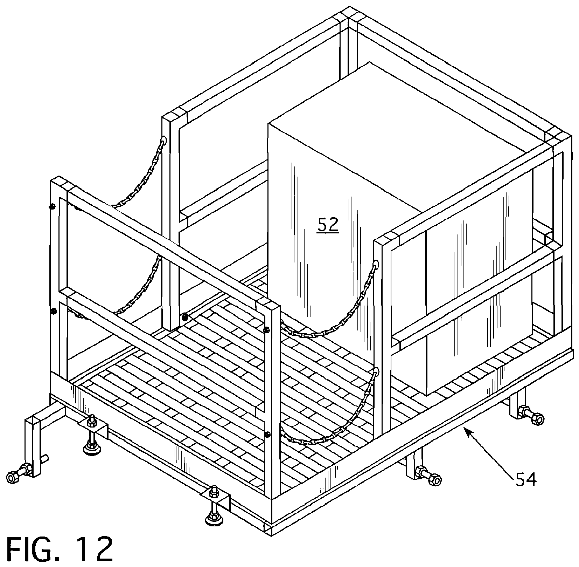

Figure 12 is an isometric view of an operator control station that can be employed with the embodiments illustrated in Figures 2-11.

### DESCRIPTION OF THE PREFERRED EMBODIMENT

The lower portion of a nuclear steam generator that contains the primary side of the reactor coolant loop is typically shielded by a concrete cubicle in which the steam generator is supported. The embodiments described herein provide a temporary installation and alignment tool for supporting the steam generator within its concrete shielding in the course of construction of a nuclear power plant that enables the steam generator to be raised, lowered, rotated and tilted so it can be aligned with the connecting reactor coolant piping and the erection of a permanent steam generator support. While the support and alignment fixture described herein can be used as a permanent steam generator support, it serves more value as a temporary support during construction where it can be moved from generator to generator to facilitate the attachment of each of the steam generators to the reactor primary coolant system. The support fixture described herein uses structural steel support framing and hydraulic jacking and control monitoring devices to lift, jack, laterally move, tilt and rotate a steam generator during its installation process.

Previous nuclear steam generators required stable base supports to be installed prior to setting the generators in position. The steam generators were fastened to the base supports and became self-supporting. Such a support is not practical for the type of steam generator illustrated in Figure 1, which has two main coolant pumps extending vertically from its lower end.

The embodiments described herein are unique in that they stabilize and support the entire weight of the steam generator after the steam generator is initially situated within its shielding compartment and maneuver the steam generator into alignment with the coolant piping to which it is to be welded. Thus, the embodiments set forth herein permit the overhead crane to be disengaged from the steam generator so that it is available for other construction work. Accordingly, the support fixtures described herein enable the setting of an unbalanced steam generator which has two reactor coolant pump casings welded on the bottom end of the steam generator, while supporting and enabling movement of the loaded steam generator in three directions and installation of permanent upper, lower and intermediate lateral supports and snubbers.

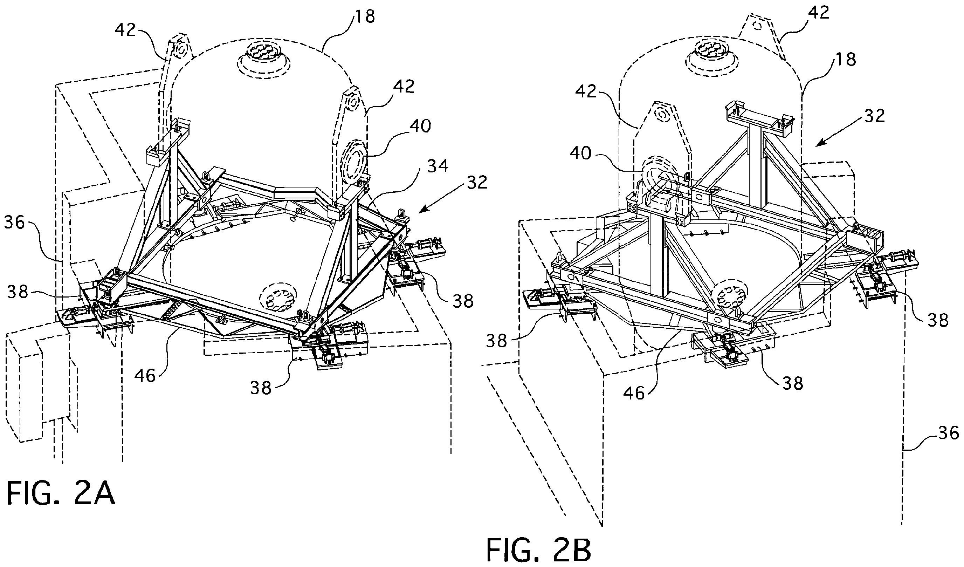

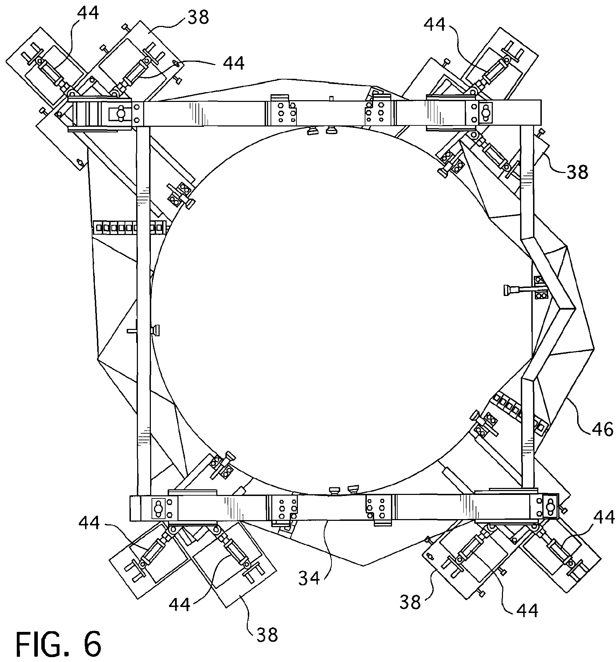

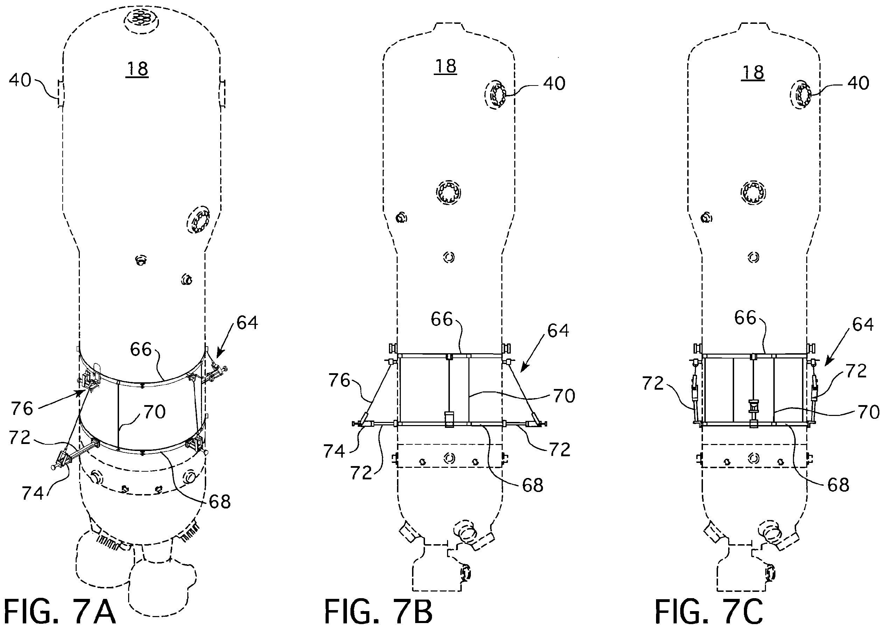

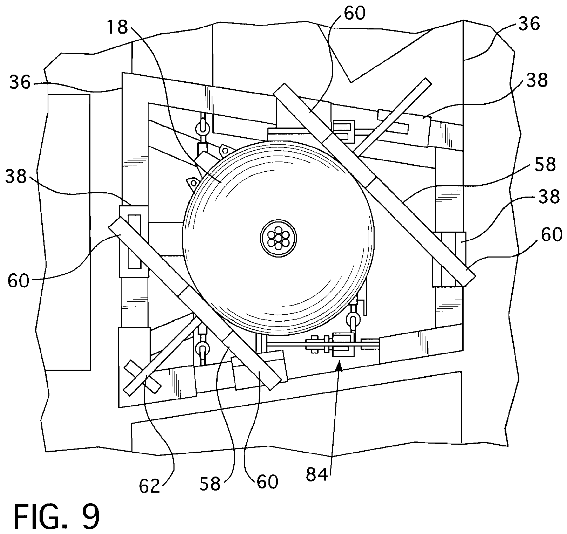

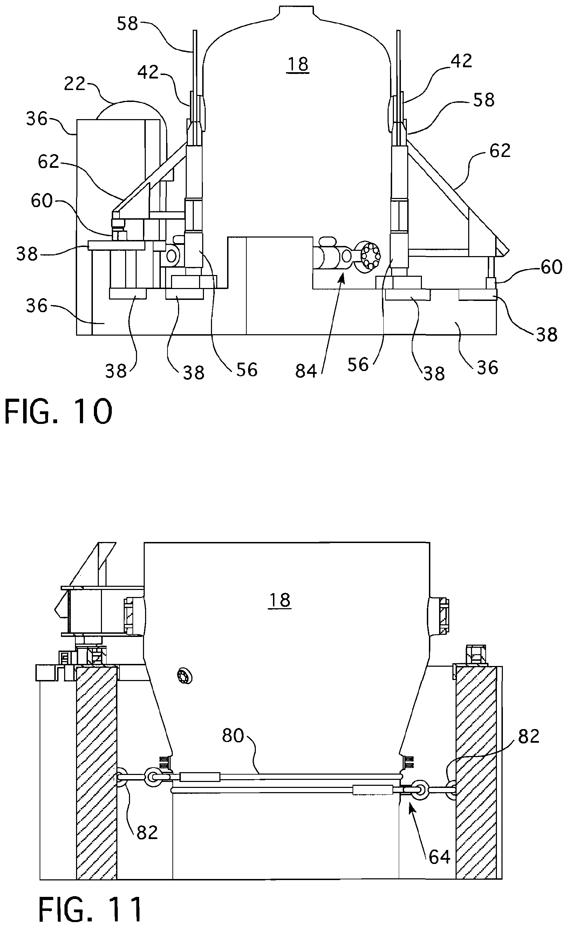

While the alignment fixture of the embodiments described herein are illustrated as being applied to an AP1000 nuclear plant, and more particularly an AP1000 nuclear steam generator, it should be appreciated that the principles described herein can be applied to most any tube and shell steam generator design. One embodiment of the alignment and support fixture claimed hereafter is disclosed in Figures 2-8, with an upper support frame of the fixture illustrated in Figures 2-6. In this embodiment, as illustrated in Figures 2A and 2B, the upper support frame 34 of the support fixture 32 is located on top of the concrete walls 36 that surround the lower portion of the steam generator 18. The lower portion of the steam generator can be temporarily or permanently supported within the compartment's walls 36 in a variety of ways as illustrated, for example, in Figures 7, 8 and 11, as will be described hereinafter. A second embodiment of the upper support 34 is illustrated in Figures 9 and 10.

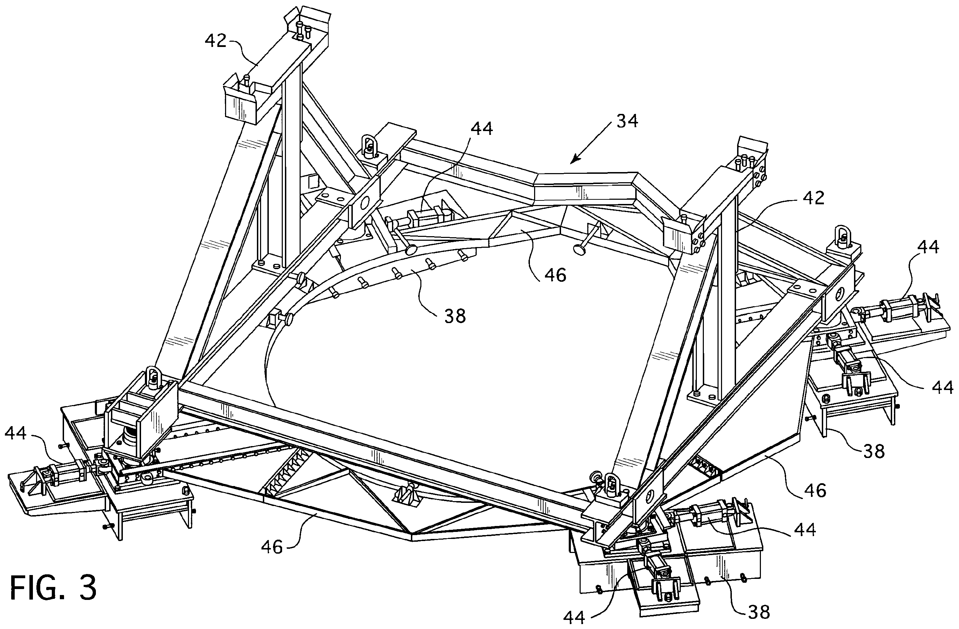

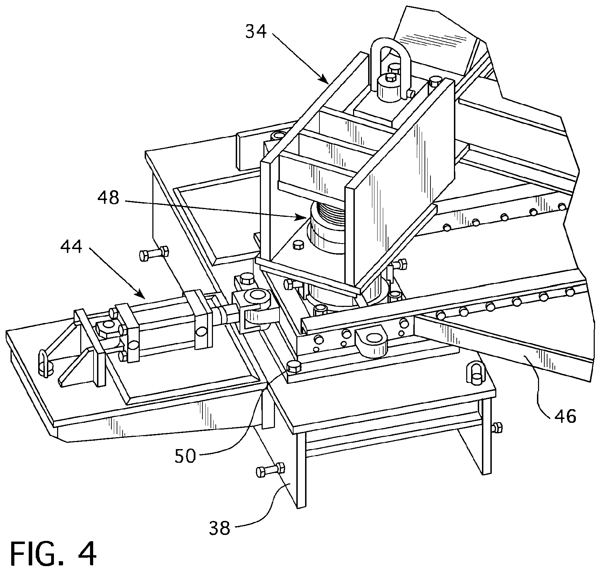

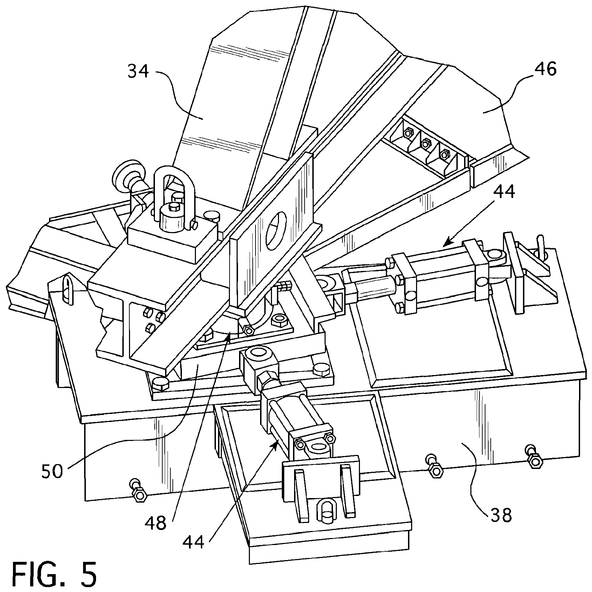

As shown in Figure 2, the upper support frame 34 is formed from a structural steel frame that surrounds the generator and rests on four spaced shoes 38 that respectively rest on the top of the concrete walls 36 that surround the lower portion of the steam generator 18. As shown in Figures 2A and 2B, the steam generator bearing load is supported on two secondary manway lift trunnions 40, by a lift link 42 which extends vertically from diametrically opposite sides of the support frame 34. Each saddle 38 that supports the upper support frame 34 on the concrete walls 36, engages at least one lateral hydraulic member, and preferably two such hydraulic members 44 as shown in Figures 3-6. Each lateral hydraulic member 44 is respectively attached or otherwise engaged with support ring 46 that encircles at least a portion of the steam generator 18. The support ring 46 may be a single component or comprise multiple members. The support ring 46 supports or otherwise engages multiple vertical hydraulic members 48 which are each positioned between a saddle 38 and the upper support frame 34. In the embodiments shown in Figures 2-6, the support ring 46 supports four vertical hydraulic members 48, one at each of the saddle locations approximately evenly spaced around the support ring 46 and is engaged respectively with two lateral hydraulic members respectively oriented in the X and Y planes. It can be appreciated best from Figures 4 and 5, that the vertical hydraulic members 48 are respectively mounted on a lubron bearing translation pad 50 which is affixed to a corresponding wall saddle 38 and is in turn connected to each lateral hydraulic member 44. Another end of vertical hydraulic member 48 is connected to the upper support frame 34 and the radial inward portion of the lubron bearing 50 is connected to the support ring 46. The vertical hydraulic members engage and support the upper support frame 34 which in turn engages and supports the steam generator lift link 42.

The steam generator temporary support upper support frame 42 thus described is supported by the cubicle walls 36 at an elevation of approximately 153 feet above the operating floor of the containment and has a relatively small operator platform 54 and control box 52 for controlling the operation of the various hydraulic members. The vertical hydraulic members enable up and down movement of the steam generator up to approximately six inches (15.24 centimeters) in 1/32 inch (0.08 centimeters) increments. Similarly, the lateral hydraulic members enable lateral and transverse movement of the steam generator up to six inches (15.24 centimeters) in 1/32 inch (0.08 centimeters) increments. The system of this embodiment also enables correction of the steam generator vertical axis by 0.50 degrees. Control of the several hydraulic members can be had from the control unit 52 which can be accessed on the control platform 54 which is temporarily cantilevered from the top of the concrete walls 36 that surround the generator 18.

As an alternate to the system illustrated in Figures 2 through 6, described above, the positioning and alignment system of this application may utilize a jacking mechanism such as the Enerpac^{®} (or equivalent) single acting hydraulic jacks 56 which are connected to the support members 58 which carry the support links 42 which support the steam generator trunnions 40. In the embodiment illustrated in Figures 9 and 10, Hillman Swivel OT rollers (or equivalent) 60 are employed with a synchronized master control unit 52. Similarly, the GenMover "MUSE" moving system may be employed. In Figures 9 and 10, the Hillman rollers 60 are supported from the support members 58 by the support links 62. The support and alignment system described herein may have a single control unit 52 or be operated remotely by a technician. The control system is universal and may be interchangeable between multiple steam generators connected to the same reactor. The control system includes all of the hydraulic power units, hydraulic plumbing lines and control valves. The hydraulic jacks 56 are preferably single acting with mechanical locking devices for safety. An Enerpac^{®} PV-42 (or equivalent) control or monitoring device may be employed with such a system.

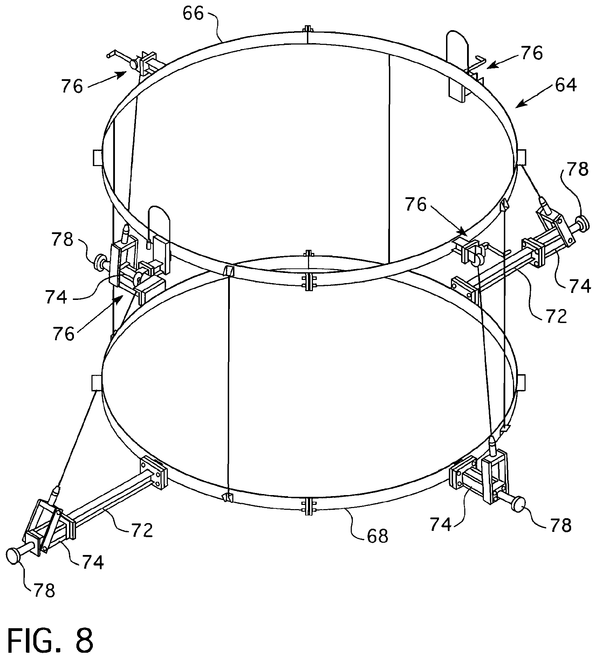

In operation, the embodiments illustrated in Figures 2-6 may function as follows. An overhead crane or outside heavy duty mobile crane can transport and position a steam generator adjacent to the cubicle walls in which the generator is to be situated. The crane generally performs this function by engaging the trunnions 40. The crane will lower the steam generator into the void area surrounded by the cubicle module walls 36 and over a vertical column support ("pogo stick"). As the steam generator 18 is lowered by the crane, each trunnion respectively engages a lift link 42 on the upper support frame 34. Upon the support frame engaging the steam generator 18, via the lift link 42 and the lower restraint, for example, as illustrated in Figures 7 and 8, being secured, the hydraulic members connected to the upper support frame 34 may be utilized to maneuver the steam generator into the desired position in alignment with the primary coolant piping. In this regard, the vertical hydraulic members 48 may be activated to lower or raise the steam generator 18. As previously mentioned, the vertical hydraulic members 48 support the upper support frame 34 and are attached to the support ring 46. The lateral hydraulic members 44 may then be activated to maneuver the steam generator in the X-Y direction. In the exemplary embodiment shown in Figures 2-6, each lateral hydraulic member 44 is positioned adjacent and connected to a saddle 38 and each of the saddles are connected to the support ring 46 at circumferentially spaced locations. The lateral hydraulic member 44 can thus force the support ring 46 to change position. Forcing the support ring 46 to change position as a result of the activation of the lateral hydraulic member 44 causes the upper support frame to change position in an X-Y plane. In the embodiment shown, the support ring is engaged with the steam generator 18 by way of toggles, and with the saddle 38 by way of the lubron bearings 50. Any suitable device may be used for these connections. The toggles and lubron bearings 50 respectively cause the support ring to be movable attached to the steam generator 18 and the saddle 38.

Two exemplary, alternate lower restraint assemblies are shown in Figures 7, 8 and 11. Other similar restraints may also be used. In the embodiment shown in Figures 7 and 8, the lower restraint 64 comprises an upper band 66 and a lower band 68. Both bands are respectively fixed to a lower section of the steam generator 18 in an area where the primary coolant flows within U-tubes within the steam generator housing. The upper band 66 and the lower band 68 are engaged with each other by a plurality of vertically connecting members 70. A plurality of spaced extension arms 72 with hydraulic jack systems 74 respectively at their distal ends extend radially from and are at spaced locations around the lower band 68. The extension arms 72 are preferably pivotably connected to the lower band 68. Multiple winches 76 are respectively attached at various spaced locations on the circumference of the upper band 66 vertically aligned with the extension arm 72 for up righting the hydraulic jack system 74 at the distal end of the extension arm 72. Aligned extension arms 72 and winches 76 are respectively engaged with each other via a wire cable. The winches 76 are utilized to raise and lower the extension arms 72 to enable the extension arms to radially retract against the steam generator housing so that the steam generator 18 can be lowered within the concrete walls 36 of a shielding cubicle. The winches 76 can then lower the extension arm 72 so the hydraulic jack systems 74 can be extended to engage the module walls 36 and brace the lower portion of the generator 18 against the cubicle module walls. A pad 78 is positioned at the end of each extension 72. The pad 78 engages the module walls 36 during deployment of the lower restraint assembly. Figure 7A shows the lower restraint assembly with the extension arms 72 in the retracted position so that the generator can be lowered into its concrete walled cubicle that ultimately shields the generator. Figure 7B shows the winch cables fully extended and the extension arms 72 lowered for the deployment of the hydraulic jack 74 at their distal end. Figure 7C shows a similar view with the extension arms 72 fully extended with the generator slightly rotated from the view shown in Figures 7B and provides another perspective of an extended extension arm 72 and corresponding winch 76. An alternate lower restraint 64 is shown in Figure 11 in which the steam generator 18 is tied down to the concrete walls 36 employing a cable 80 and anchors 82.

An upper lateral support with a snubber 84 may also be used to engage the steam generator 18 to the concrete walls 36 as shown in Figures 9 and 10. As previously mentioned with regard to the alternate embodiment of the upper support previously described with regard to Figures 9 and 10, the hydraulic jacks 56 may raise or lower the steam generator by raising or lowering the support members 58 and support links 62. The hydraulic jack 56 may also remove any load from the Hillman rollers 60 thereby allowing the Hillman rollers to be rotated to a different position. Lateral hydraulic actuators may also be used in this embodiment, as previously described with regard to the embodiment illustrated in Figures 2-6, to force the support link 62 and support member 58 to move in various directions. The hydraulics are controlled by a computer system that synchronizes their actions to simultaneously cause the desired movement. The control system can also function to synchronize the hydraulic jacks 74 on the lower restraint 64 with the upper restraint 34.

While specific embodiments of the invention have been described in detail, it will be appreciated by those skilled in the art that various modifications and alternatives to those details could be developed in light of the overall teachings of the disclosure. For example, pneumatic cylinders may be employed in place of the hydraulic cylinders. Accordingly, the particular embodiments disclosed are meant to be illustrative only and not limiting as to the scope of the invention which is to be given the full breadth of the appended claims.

## Claims

1. A nuclear steam generator support and alignment structure (32) for supporting a steam generator (18) in a vertical orientation, from a floor or an internal wall (36) of a nuclear containment and aligning an inlet nozzle and an outlet nozzle of the steam generator with a primary coolant loop piping (20) of a reactor system, comprising:
a support fixture (34) configured to be supported on and extend from the floor or internal wall (36) of the nuclear containment and to be attached to at least two sides of the steam generator (18) to secure and support the entire weight of the steam generator in the vertical orientation, on the support fixture, the support fixture including:
a base (38) configured to be supported on the floor or internal wall (36);
a support section (42) configured to be attached to a portion of the circumference of a side of the steam generator (18), the support section forming a part of the support fixture; and
a means (44, 48) connected between the base and the support section, the means being configured to raise, lower, laterally move and rotate the support section (42) relative to the base (38) with the steam generator (18) secured within the support section, the raising and lowering being in increments as little as 0.08cm, to align the steam generator inlet nozzle and outlet nozzle with the primary coolant loop piping (20) of the reactor system.

2. The nuclear steam generator support and alignment structure (32) of Claim 1 wherein the means (44, 48) configured for raising, lowering, laterally moving and rotating the support section includes a plurality of hydraulic jacks between the base (38) and the support section (42).

3. The nuclear steam generator support and alignment structure (32) of Claim 1 wherein the means (44, 48) configured for raising, lowering, laterally moving and rotating the support section (42) is also configured to tilt the support section (42) relative to the base (38) with the steam generator (18) secured within the support section.

4. The nuclear steam generator support and alignment structure (32) of Claim 1 for use with a steam generator (18) that has a lower cylindrical reduced diameter section, an upper cylindrical section having a diameter larger than the reduced diameter section and a frustoconical section connecting the lower reduced diameter section to the enlarged diameter upper cylindrical section, wherein the support fixture comprises an upper support section (42) for connection to the upper cylindrical section and a lower support section (64) for connection to the lower cylindrical reduced diameter section.

5. The nuclear steam generator support and alignment structure (32) of Claim 4 wherein the means (44, 48) configured to raise, lower, laterally move and rotate the support section (42) relative to the base (38) is connected between the upper support section (42) and the base (38).

6. The nuclear steam generator support and alignment structure (32) of Claim 5 wherein the lower support section (64) is located below the base (38).

7. The nuclear steam generator support and alignment structure (32) of Claim 4, wherein the upper support section (42) has four saddles (38) for supporting it at four points on an internal wall (36) at least partially surrounding the steam generator (18).

8. The nuclear steam generator support and alignment structure (32) of Claim 7 wherein each saddle (38) has at least one lateral hydraulic member (44) associated with it for laterally moving the steam generator (18).

9. The nuclear steam generator support and alignment structure (32) of Claim 8 wherein the upper support section (42) includes a support ring (46) configured substantially to surround the circumference of the upper cylindrical section of the steam generator (18), and each of the lateral hydraulic members (44) respectively engages the support ring to laterally move the support ring and thus the steam generator when the lateral hydraulic members are activated.

10. The nuclear steam generator support and alignment structure (32) of Claim 9 wherein the support ring (46) is configured to support and engage a plurality of vertical hydraulic members (44, 48), wherein each of the vertical hydraulic members (48) is positioned adjacent a corresponding lateral hydraulic member (44).

11. The nuclear steam generator support and alignment structure (32) of Claim 10 wherein each of the vertical hydraulic members (48) is configured to engage and support the support frame (34) which is engaged with a respective steam generator lift link (42).

12. The nuclear steam generator support and alignment structure (32) of Claim 7 wherein the lower support section (64) is configured to be braced against at least two diametrically opposed points on an inside of the internal wall (36) in a manner that will permit the steam generator (18) to rotate and move up, down and laterally a given distance, but limit a side to side movement of the steam generator.

13. The nuclear steam generator support and alignment structure (32) of Claim 1 wherein the means (44, 48) configured to raise, lower, laterally move and rotate the support section (42) relative to the base (38) comprises a plurality of hydraulic members (44, 48).

14. The nuclear steam generator support and alignment structure (32) of Claim 13 wherein at least some of the hydraulic members (44) act in combination with a bearing plate (50) or roller support (60) to effect movement of the steam generator (18).

15. The nuclear steam generator support and alignment structure (32) of Claim 13 wherein the hydraulic members (44, 48) are configured to tilt the support section (42) and the steam generator (18) when supported within the support section.

## Patentansprüche

1. Stütz- und Ausrichtungsstruktur (32) für einen nuklearen Dampferzeuger zum Abstützen eines Dampferzeugers (18) in einer vertikalen Ausrichtung von einem Boden oder einer Innenwand (36) eines nuklearen Sicherheitsbehälters und Einfluchten einer Einlassdüse und einer Auslassdüse des Dampferzeugers mit einem Primärkühlmittelkreislauf-Leitungssystem (20) eines Reaktorsystems, umfassend:
eine Stützhalterung (34), die dafür konfiguriert ist, auf dem Boden oder der Innenwand (36) des nuklearen Sicherheitsbehälters abgestützt zu werden und sich von dort zu erstrecken, und dafür, an mindestens zwei Seiten des Dampferzeugers (18) angebracht zu werden, um das gesamte Gewicht des Dampferzeugers in der vertikalen Ausrichtung auf der Stützhalterung zu befestigen und abzustützen, wobei die Stützhalterung aufweist:
eine Basis (38), die dafür konfiguriert ist, auf dem Boden oder der Innenwand (36) abgestützt zu werden;
eine Stützsektion (42), die dafür konfiguriert ist, an einem Abschnitt des Umfangs einer Seite des Dampferzeugers (18) angebracht zu werden, wobei die Stützsektion einen Teil der Stützhalterung bildet; und
Mittel (44, 48), die zwischen der Basis und der Stützsektion verbunden sind, wobei die Mittel dafür konfiguriert sind, die Stützsektion (42) relativ zur Basis (38) anzuheben, abzusenken, seitwärts zu bewegen und zu drehen, während der Dampferzeuger (18) innerhalb der Stützsektion befestigt ist, wobei das Anheben und Absenken in Schritten von lediglich 0,08 cm erfolgt, um die Dampferzeuger-Einlassdüse und -Auslassdüse mit dem Primärkühlmittelkreislauf-Leitungssystem (20) des Reaktorsystems einzufluchten.

2. Stütz- und Ausrichtungsstruktur (32) für einen nuklearen Dampferzeuger nach Anspruch 1, worin die Mittel (44, 48), die zum Anheben, Absenken, Seitwärtsbewegen und Drehen der Stützsektion konfiguriert sind, eine Vielzahl von Hubzylindern zwischen der Basis (38) und der Stützsektion (42) aufweisen.

3. Stütz- und Ausrichtungsstruktur (32) für einen nuklearen Dampferzeuger nach Anspruch 1, worin die Mittel (44, 48), die zum Anheben, Absenken, Seitwärtsbewegen und Drehen der Stützsektion (42) konfiguriert sind, außerdem dafür konfiguriert sind, die Stützsektion (42) relativ zur Basis zu (38) neigen, während der Dampferzeuger (18) innerhalb der Stützsektion befestigt ist.

4. Stütz- und Ausrichtungsstruktur (32) für einen nuklearen Dampferzeuger nach Anspruch 1 zur Verwendung mit einem Dampferzeuger (18), der eine untere zylinderförmige Sektion mit verringertem Durchmesser, eine obere zylinderförmige Sektion mit einem größeren Durchmesser als die Sektion mit verringertem Durchmesser und eine kegelstumpfförmige Sektion hat, welche die untere Sektion mit verringertem Durchmesser mit der oberen zylinderförmigen Sektion mit vergrößertem Durchmesser verbindet, worin die Stützhalterung eine obere Stützsektion (42) zur Verbindung mit der oberen zylinderförmigen Sektion und eine untere Stützsektion (64) zur Verbindung mit der unteren zylinderförmigen Sektion mit verringertem Durchmesser umfasst.

5. Stütz- und Ausrichtungsstruktur (32) für einen nuklearen Dampferzeuger nach Anspruch 4, worin die Mittel (44, 48), die konfiguriert sind, die Stützsektion (42) relativ zur Basis (38) anzuheben, abzusenken, seitwärts zu bewegen und zu drehen, zwischen der oberen Stützsektion (42) und der Basis (38) verbunden sind.

6. Stütz- und Ausrichtungsstruktur (32) für einen nuklearen Dampferzeuger nach Anspruch 5, worin die untere Stützsektion (64) unterhalb der Basis (38) angeordnet ist.

7. Stütz- und Ausrichtungsstruktur (32) für einen nuklearen Dampferzeuger nach Anspruch 4, worin die obere Stützsektion (42) vier Auflager (38) hat, um sie an vier Punkten auf einer Innenwand (36) abzustützen, die den Dampferzeuger (18) zumindest teilweise umgibt.

8. Stütz- und Ausrichtungsstruktur (32) für einen nuklearen Dampferzeuger nach Anspruch 7, worin jedes Auflager (38) mindestens ein ihm zugeordnetes seitliches Hydraulikelement (44) zum Seitwärtsbewegen des Dampferzeugers (18) hat.

9. Stütz- und Ausrichtungsstruktur (32) für einen nuklearen Dampferzeuger nach Anspruch 8, worin die obere Stützsektion (42) einen Stützring (46) aufweist, der dafür konfiguriert ist, den Umfang der oberen zylinderförmigen Sektion des Dampferzeugers (18) im Wesentlichen zu umgeben, und jedes der seitlichen Hydraulikelemente (44) jeweils in den Stützring eingreift, um den Stützring und somit den Dampferzeuger seitwärts zu bewegen, wenn die seitlichen Hydraulikelemente aktiviert werden.

10. Stütz- und Ausrichtungsstruktur (32) für einen nuklearen Dampferzeuger nach Anspruch 9, worin der Stützring (46) dafür konfiguriert ist, eine Vielzahl von vertikalen Hydraulikelementen (44, 48) zu stützen und darin einzugreifen, worin jedes der vertikalen Hydraulikelemente (48) angrenzend an ein entsprechendes seitliches Hydraulikelement (44) angeordnet ist.

11. Stütz- und Ausrichtungsstruktur (32) für einen nuklearen Dampferzeuger nach Anspruch 10, worin jedes der vertikalen Hydraulikelemente (48) dafür konfiguriert ist, in den Stützrahmen (34), der mit einem jeweiligen Dampferzeuger-Heberverbindungsstück (42) in Eingriff ist, einzugreifen und ihn abzustützen.

12. Stütz- und Ausrichtungsstruktur (32) für einen nuklearen Dampferzeuger nach Anspruch 7, worin die untere Stützsektion (64) dafür konfiguriert ist, gegen mindestens zwei diametral gegenüberliegende Punkte auf einer Innenseite der Innenwand (36) verstrebt zu werden, und zwar auf eine Weise, die gestattet, dass der Dampferzeuger (18) sich dreht und sich aufwärts, abwärts und seitwärts um eine gegebene Strecke bewegt, aber eine Bewegung des Dampferzeugers von einer Seite zur anderen begrenzt.

13. Stütz- und Ausrichtungsstruktur (32) für einen nuklearen Dampferzeuger nach Anspruch 1, worin die Mittel (44, 48), die dafür konfiguriert sind, die Stützsektion (42) relativ zur Basis (38) anzuheben, abzusenken, seitwärts zu bewegen und zu drehen, eine Vielzahl von Hydraulikelementen (44, 48) umfassen.

14. Stütz- und Ausrichtungsstruktur (32) für einen nuklearen Dampferzeuger nach Anspruch 13, worin mindestens einige der Hydraulikelemente (44) in Kombination mit einer Auflagerplatte (50) oder einem Rollenauflager (60) agieren, um Bewegung des Dampferzeugers (18) zu bewirken.

15. Stütz- und Ausrichtungsstruktur (32) für einen nuklearen Dampferzeuger nach Anspruch 13, worin die Hydraulikelemente (44, 48) dafür konfiguriert sind, die Stützsektion (42) und den Dampferzeuger (18) zu neigen, wenn er in der Stützsektion abgestützt ist.

## Revendications

1. Structure de support et d'alignement d'un générateur de vapeur nucléaire (32) pour supporter un générateur de vapeur (18) dans une orientation verticale à partir d'un plancher ou d'une paroi interne (36) d'une enceinte de confinement nucléaire et pour aligner une buse d'entrée et une buse de sortie du générateur de vapeur avec une canalisation de boucle de refroidissement primaire (20) d'un système de réacteur, comprenant :
un bâti de support (34) configuré pour être supporté sur le plancher ou la paroi interne (36) de l'enceinte de confinement nucléaire et pour s'étendre à partir de celui-ci, et pour être fixé sur au moins deux côtés du générateur de vapeur (18), pour fixer et supporter l'ensemble du poids du générateur de vapeur dans l'orientation verticale, sur le bâti de support, le bâti de support incluant :
une base (38) configurée pour être supportée sur le plancher ou sur la paroi interne (36) ;
une section de support (42) configurée pour être fixée sur une partie de la circonférence d'un côté du générateur de vapeur (18), la section de support faisant partie du bâti de support ; et
un moyen (44, 48) connecté entre la base et la section de support, le moyen étant configuré pour soulever, abaisser, déplacer latéralement et faire tourner la section de support (42) par rapport à la base (38), le générateur de vapeur (18) étant fixé dans la section de support, le soulèvement et l'abaissement étant effectués par incréments ne dépassant pas 0,08 cm, afin d'aligner la buse d'entrée et la buse de sortie du générateur de vapeur avec la canalisation de boucle de refroidissement primaire (20) du système de réacteur.

2. Structure de support et d'alignement d'un générateur de vapeur nucléaire (32) selon la revendication 1, dans lequel le moyen (44, 48) configuré pour soulever, abaisser, déplacer latéralement et faire tourner la section de support inclut plusieurs vérins hydrauliques entre la base (38) et la section de support (42).

3. Structure de support et d'alignement d'un générateur de vapeur nucléaire (32) selon la revendication 1, dans lequel le moyen (44, 48) configuré pour soulever, abaisser, déplacer latéralement et faire tourner la section de support (42) est en outre configuré pour incliner la section de support (42) par rapport à la base (38), le générateur de vapeur (18) étant fixé dans la section de support.

4. Structure de support et d'alignement d'un générateur de vapeur nucléaire (32) selon la revendication 1, destinée à être utilisée avec un générateur de vapeur (18) comportant une section cylindrique inférieure à diamètre réduit, une section cylindrique supérieure ayant un diamètre supérieur à celui de la section à diamètre réduit, et une section en tronc de cône connectant la section inférieure à diamètre réduit à la section cylindrique supérieure à diamètre accru, dans lequel le bâti de support comprend une section de support supérieure (42) destinée à être connectée à la section cylindrique supérieure, et une section de support inférieure (64) destinée à être connectée à la section cylindrique inférieure à diamètre réduit.

5. Structure de support et d'alignement d'un générateur de vapeur nucléaire (32) selon la revendication 4, dans lequel le moyen (44, 48) configuré pour soulever, abaisser, déplacer latéralement et faire tourner la section de support (42) par rapport à la base (38) est connecté entre la section de support supérieure (42) et la base (38).

6. Structure de support et d'alignement d'un générateur de vapeur nucléaire (32) selon la revendication 5, dans lequel la section de support inférieure (64) est agencée au-dessous de la base (38).

7. Structure de support et d'alignement d'un générateur de vapeur nucléaire (32) selon la revendication 4, dans lequel la section de support supérieure (42) comporte quatre selles (38) pour la supporter au niveau de quatre points sur une paroi interne (36) entourant au moins partiellement le générateur de vapeur (18).

8. Structure de support et d'alignement d'un générateur de vapeur nucléaire (32) selon la revendication 7, dans lequel chaque selle (38) comporte au moins un élément hydraulique latéral (44) qui y est associé pour déplacer latéralement le générateur de vapeur (18).

9. Structure de support et d'alignement d'un générateur de vapeur nucléaire (32) selon la revendication 8, dans lequel la section de support supérieure (42) inclut une bague de support (46) configurée pour entourer sensiblement la circonférence de la section cylindrique supérieure du générateur de vapeur (18), chacun des éléments hydrauliques latéraux (44) s'engageant respectivement dans la bague de support pour déplacer latéralement la bague de support et donc le générateur de vapeur lorsque les éléments hydrauliques latéraux sont actionnés.

10. Structure de support et d'alignement d'un générateur de vapeur nucléaire (32) selon la revendication 9, dans lequel la bague de support (46) est configurée pour supporter plusieurs éléments hydrauliques verticaux (44, 48) et pour s'engager dans ceux-ci, dans lequel chacun des éléments hydrauliques verticaux (48) est positionné en un point adjacent à un élément hydraulique latéral correspondant (44).

11. Structure de support et d'alignement d'un générateur de vapeur nucléaire (32) selon la revendication 10, dans lequel chacun des éléments hydrauliques verticaux (48) est configuré pour s'engager dans et pour supporter le cadre de support (34), engagé dans une bielle de soulèvement (42) respective du générateur de vapeur.

12. Structure de support et d'alignement d'un générateur de vapeur nucléaire (32) selon la revendication 7, dans lequel la section de support inférieure (64) est configurée pour être serrée contre au moins deux points diamétralement opposés sur un intérieur de la paroi interne (36), d'une manière permettant la rotation, le soulèvement, l'abaissement et le déplacement latéral sur une distance définie du générateur de vapeur (18), mais limitant le déplacement d'un côté vers l'autre du générateur de vapeur.

13. Structure de support et d'alignement d'un générateur de vapeur nucléaire (32) selon la revendication 1, dans lequel le moyen (44, 48) configuré pour soulever, abaisser, déplacer latéralement et faire tourner la section de support (42) par rapport à la base (38) comprend plusieurs éléments hydrauliques (44, 48).

14. Structure de support et d'alignement d'un générateur de vapeur nucléaire (32) selon la revendication 13, dans lequel au moins certains des éléments hydrauliques (44) agissent en combinaison avec une plaque de support (50) ou un support à rouleaux (60) pour entraîner le déplacement du générateur de vapeur (18).

15. Structure de support et d'alignement d'un générateur de vapeur nucléaire (32) selon la revendication 13, dans lequel les éléments hydrauliques (44, 48) sont configurés pour incliner la section de support (42) et le générateur de vapeur (18) lorsqu'il est supporté dans la section de support.
